# EUROPEAN PATENT APPLICATION

(11) **EP 3 315 480 A1**
(43) Date of publication of application: **02.05.2018**
(21) Application number: 16196747.6
(22) Date of filing: 01.11.2016
(51) Int. Cl.: C04B 40/00, C04B 20/02

(54) **METHOD OF GRINDING**

(71) Applicant: GCP Applied Technologies Inc., Cambridge, MA 02140-1692 (US)
(72) Inventor: Buzzell, Leslie A. J., Burlington, MA 01803 (US); Gibson, Larry, Arlington, MA 02476 (US); Cheung, Josephine H., Lexington, MA 02421 (US); Chun, Byong-Wa, Waban, MA 02468 (US)
(74) Representative: J A Kemp

(57) **Abstract**

A method of grinding an inorganic material in a mill is disclosed. A grinding aid composition is added to the inorganic material. The grinding aid composition can meet food grade and VOC-free requirements.

## Description

### Field of the Invention

The present invention relates to a method of grinding a mineral composition. The invention further relates to a grinding aid composition for use in the method of grinding.

### Background of the Invention

Limestone is a hard sedimentary rock composed mainly of calcium carbonate or dolomite. Ground limestone is used in a variety of applications, e.g. as a building material, in the making of cement, in paints, in plastics, in toothpaste, in food products and as a feedstock in the production of lime. The grinding process typically takes place in a ball mill or roller mill. A grinding aid is often employed to enhance the efficiency of the grinding process. The grinding aid reduces the amount of energy required for grinding a material to a certain particle size.

Examples of other inorganic materials that are subjected to similar grinding processes include lime, an inorganic material predominately composed of calcium oxide and calcium hydroxide; and talc, a clay mineral composed of hydrated magnesium silicate.

WO 2014 019827 discloses grinding aid compositions that are suitable for use when a grinding aid has to meet the regulatory requirements for chemicals used in the manufacture of food. Ground limestone and hydrated lime are used in the food industry and the grinding aids used to provide products for these applications must be "food grade". The grinding aid compositions comprise one or more polyhydric alcohols having at least two protic groups in an amount of from about 10% to 95% by weight (and most preferably 20%-40% by weight), or one or more carboxylic acids in an amount of from about 0.1 % to 10% by weight (and most preferably 1-2% by weight) or mixtures thereof. Exemplary compositions comprise 15-50 wt% glycerol, 49-84 wt% water and 1 wt% of an antifungal/antibacterial agent.

The present inventors have sought to develop grinding aids that can be used to prepare ground material that is suitable for use in a variety of applications. A preferred grinding aid would meet food-grade requirements, but would also be free of volatile organic compounds (VOC) such that the ground material could be incorporated into paints and any other products wherein regulators have set limits for VOC content. Desirably the grinding aid should also not increase the moisture-absorbing tendency of the ground material. If the ground material absorbs too much water this can decrease bulk material flow and reduce the efficiency of the grinding process. Conventional grinding aid compositions that contain glycerol may increase the amount of water absorbed by the ground material.

The present inventors have sought to provide a method of grinding wherein a grinding aid composition is used, and desirably the grinding aid composition does not limit the applications of the ground material.

### Summary of the Invention

Accordingly, the present invention provides a method of grinding an inorganic material in a mill comprising steps of:
adding a grinding aid composition to the inorganic material; and
grinding the inorganic material in the mill;
wherein the grinding aid composition comprises at least 6 wt% of benzoic acid or a salt of benzoic acid; and
wherein at least 90 wt% of the inorganic material is limestone, lime and/or talc.

The present invention further provides a grinding aid composition comprising:
from 6 to 36 wt% benzoic acid or a salt of benzoic acid;
from 0.1 to 80 wt% of tripropylene glycol or polypropylene glycol; and
from 10 to 80 wt% water.

The present invention further provides the use of benzoic acid or a salt of benzoic acid in a method of grinding an inorganic material in a mill, wherein at least 90 wt% of the inorganic material is limestone, lime and/or talc, for enhancing the efficiency of the grinding process.

The inventors have surprisingly found that a grinding aid composition comprising benzoic acid or a salt thereof can act as an effective grinding aid for the preparation of ground limestone, lime or talc. Such a composition can also meet food-grade requirements, can be VOC-free and can limit the amount of moisture absorbed by the ground material. Grinding aid compositions comprising benzoic acid or a salt thereof, tripropylene glycol or polypropylene glycol and water are advantageously used in the process of the invention.

### Detailed Description of the Invention

The grinding aid compositions used in the method of the invention can provide a ground material that is suitable for use in the food industry. To be "food grade", a compound must meet the regulatory requirements set by the relevant authorities, e.g. the U.S. Food Chemical Codex (FCC, 6th Edition, 2008). To be "food contact" approved, a compound must meet a different set of regulatory requirements set by the relevant authorities, e.g. the food contact list from the US Food and Drug Administration (FDA). In the European Union, substances that are approved as food additives are given "E" numbers and are listed in the annexes of Commission Regulation No 1130/2011. Preferably the grinding aid composition is composed entirely of components that meet food grade requirements and/or that meet food contact requirements and/or are approved as food additives.

The grinding aid compositions used in the method of the invention can also provide a ground material that is suitable for use in applications that require a low or zero presence of volatile organic compounds (VOC). According to European Union regulations, to be considered VOC-free, a composition must be devoid of organic matter having a boiling point that is less than or equal to 250 degrees Celsius at standard atmospheric pressure (101.325 kPa). See, for example, EU "Paint Directive" 2004/42/EC and European Eco-Labelling Scheme 2002/739/EC, amending 1999/10/EC. Preferably the grinding aid composition does not contain any organic compounds having a boiling point that is less than or equal to 250°C at standard atmospheric pressure.

The grinding aid compositions used in the method of the invention can also provide a ground material, wherein the amount of moisture absorbed by the ground material is reduced, compared the ground materials prepared using conventional grinding aids. Typically the ground inorganic material that results from the method of the invention absorbs less than 1.6mg/g (mg of water absorbed per g of ground inorganic material), more preferably less than 1.4mg/g. Typically the ground inorganic material that results from the method of the invention absorbs about the same amount of water as ground inorganic material that has been produced in a method wherein no grinding aid composition is used or absorbs less water, e.g. not greater than 140wt% of the amount of water absorbed by ground inorganic material produced without a grinding aid, preferably not greater than 105wt% and most preferably around 100wt% or less.

The inorganic material comprises at least 90 wt% of limestone, lime and/or talc, based upon the weight of the inorganic material. These three materials may be used in the food industry, in agriculture or in personal care products, so it is often important that the ground material meets the "food grade" requirements. The materials, particularly limestone, may also be used in paints, so it is often important that the ground material is VOC-free. The inorganic material may also comprise titanium dioxide, alumina, kaolin and/or ceramics. However, preferably at least 90 wt% of the inorganic material is limestone, lime and/or talc, more preferably at least 95 wt% and most preferably at least 99 wt%. Preferably at least 90 wt% of the inorganic material is limestone and/or lime, more preferably at least 95 wt% and most preferably at least 99 wt%. Preferably the inorganic material does not comprise cement clinker.

The inorganic material preferably comprises at least 90 wt% limestone, more preferably comprises at least 95 wt% limestone, yet more preferably comprises at least 99 wt% limestone and most preferably comprises 100 wt% limestone. The term "limestone" includes forms of limestone that are predominately calcium carbonate and also forms of limestone that are predominantly dolomite. The term "limestone" also includes forms of limestone that are entirely composed of calcium carbonate, i.e. the term "limestone" covers pure calcium carbonate.

The inorganic material may be supplied to the mill in any form whereby the method of grinding can reduce the average particle size. Before being supplied to the mill, the inorganic material may be subjected to processes that reduce the size of the particles, e.g. the inorganic material may be crushed using a jaw crusher and/or a roll crusher.

Grinding of the inorganic material takes place in a mill. The mill is suitably one or more ball mills, one or more roller mills or a combination of one or more ball mills and one or more roller mills. In the grinding process the inorganic material is comminuted; the average particle size of the inorganic material is reduced. Typically the ground inorganic material that results from the method of the invention is such that less than 50 wt% of the ground material is retained on a 45 µm sieve, preferably less than 10 wt% is retained, more preferably less than 5 wt% is retained. Typically the ground inorganic material that results from the method of the invention has a Blaine fineness of greater than 3000 cm²/g, preferably greater than 5000 cm²/g, and more preferably greater than 7000 cm²/g. "Blaine fineness" is a specific surface area measurement according to ASTM C204-16 and is measured in a Blaine air permeability apparatus.

The duration of the grinding process is suitably at least five minutes, preferably at least 10 minutes and more preferably at least 20 minutes.

The method of grinding is a dry grinding process such that the amount of water in the mill is suitably less than 10 wt%, preferably less than 5 wt% and most preferably less than 1 wt%, based upon the weight of the inorganic material that is ground in the mill.

The method of grinding may be carried out as a batch process or as a continuous process.

A grinding aid composition is added to the inorganic material. This may be carried out before the inorganic material is supplied to the mill or when the inorganic material is in the mill. The grinding aid composition may be added once, or may be added in incremental doses over a period of time. If the mill is operated in a continuous process, the grinding aid is added periodically or continually such that the grinding aid composition is present throughout the operation of the continuous process. The grinding aid composition is typically an aqueous solution and is suitably sprayed onto the inorganic material or may be dripped onto a belt carrying inorganic material towards the mill. Spraying may be carried out using a pressured nozzle and/or a pump.

The grinding aid composition is suitably an aqueous solution comprising from 10 to 80 wt% water, based upon the weight of the grinding aid composition. Preferably the grinding aid composition comprises from 20 to 60 wt% water and most preferably the grinding aid composition comprises from 30 to 50 wt% water.

The grinding aid composition comprises benzoic acid or a salt of benzoic acid. Suitable salts of benzoic acid include salts of alkali metals and alkaline earth metals, e.g. sodium benzoate and potassium benzoate. Preferably the grinding aid composition comprises sodium benzoate or potassium benzoate, more preferably sodium benzoate.

Benzoic acid and salts thereof are "food grade" and are not classified as VOCs. The present inventors have found that use of benzoic acid or benzoate salts in the grinding aid can provide ground material that contains less water than the ground material prepared using other grinding aids. The grinding aid composition comprises at least 6 wt% of benzoic acid or a salt of benzoic acid, based upon the weight of the grinding aid composition. Preferably the grinding aid composition comprises from 6 to 36wt% of benzoic acid or a salt of benzoic acid, more preferably from 6 to 30wt%, and even more preferably from 7 to 20wt% and most preferably about 18wt%.

The grinding aid composition may preferably also comprise tripropylene glycol and/or polypropylene glycol. The polypropylene glycol preferably has a molecular weight in the range of from 300 to 3000g/mole, and more preferably from 1200-3000g/mole. These compounds also act as grinding aids, meet the "food grade", or "food contact" and are not classified as VOCs (the boiling point of tripropylene glycol is 265.1°C and the boiling point of polypropylene glycol with a molecular weight of 425g/mole is 287.6°C) . By contrast, monopropylene glycol, which is commonly used as a grinding aid, has a boiling point of 187°C, so is not considered VOC free. The amount of tripropylene glycol and/or polypropylene glycol is suitably from 0.1 to 88 wt%, more preferably from 5 to 75 wt% and most preferably from 10 to 60 wt%, based upon the weight of the grinding aid composition.

The grinding aid composition may preferably also comprise an alkanolamine; more preferably triethanolamine and/or triisopropanolamine. These compounds also act as grinding aids, meet the "food grade", or "food contact" requirements and are not classified as VOCs (the boiling point of triethanolamine is 335°C and the boiling point of triisopropanolamine is 306°C). The amount of triethanolamine and/or triisopropanolamine is suitably from 0.1 to 70 wt%, more preferably from 5 to 60 wt% and most preferably from 10 to 50 wt%, based upon the weight of the grinding aid composition. For certain applications it may be desirable that the ground inorganic material does not comprise any amine, so in one embodiment of the invention, the grinding aid composition does not comprise an alkanolamine.

The grinding aid composition may preferably also comprise an amino acid or a salt of an amino acid, wherein the amino acid is preferably chosen from phenylalanine, isoleucine, tryptophan, leucine, valine, methionine, tyrosine, cysteine, alanine, threonine, histidine and glycine. These compounds also act as grinding aids, meet the "food grade" requirements and are not classified as VOCs. The amount of the amino acid or the salt of an amino acid is suitably from 0.1 to 10 wt%, more preferably from 1 to 5 wt% and most preferably from 3-4 wt%, based upon the weight of the grinding aid composition.

The grinding aid composition may preferably also comprise ascorbic acid or a salt of ascorbic acid. Suitable salts of ascorbic acid include salts of alkali metals and alkaline earth metals, e.g. monosodium ascorbate and calcium diascorbate. The terms "ascorbic acid" and "ascorbate" are used to cover all stereoisomers of ascorbic acid and ascorbate, i.e it encompasses L-ascorbic acid, D-ascorbic acid, D-isoascorbic acid (also known as erythorbic acid) and L-isoascorbic acid, and the corresponding ascorbates. These compounds also act as grinding aids, meet the "food grade" requirements and are not classified as VOCs. The amount of the ascorbic acid or the salt of ascorbic acid is suitably from 0.1 to 24 wt%, more preferably from 2 to 15 wt% and most preferably from 5 to 10 wt%, based upon the weight of the grinding aid composition.

The grinding aid composition may preferably also comprise a fatty acid compound which has 3-10 carbons; more preferably 5-8 carbons, and most preferably 6 carbons. A preferred fatty acid compound is a metal sorbate, preferably potassium sorbate. Potassium sorbate meets the "food grade" requirements and is not classified as a VOC (the boiling point is greater than 270°C). The amount of potassium sorbate is suitably 10-60% by weight based upon the weight of the grinding aid composition.

The grinding aid composition may preferably also comprise a sugar alcohol, more preferably ribose. Ribose also acts as a grinding aid, meets the "food grade" requirements and is not classified as a VOC.

Other components that may be included in the grinding aid composition include antifungal/antibacterial agents and viscosity modifiers. A viscosity modifier may be incorporated in an amount of from 0.001-1wt%, based upon the weight of the grinding aid composition. Suitable viscosity modifiers include polysaccharide biopolymers, e.g. diutan gum, welan gum, xanthan gum and guar gum. These viscosity modifiers have the advantage that they typically meet food grade requirements.

The amount of grinding aid composition added to the inorganic material is preferably from 10 to 1000 ppm of benzoic acid or salt thereof, wherein the parts per million are based upon the weight of the ascorbic acid (or the benzoate salt) compared to weight of the inorganic material, more preferably from 100 to 800 ppm. If insufficient grinding aid is added then there will be insufficient improvement in the efficiency of grinding. However, if too much grinding aid is added then this can lead to material caking and/or movement of material too quickly through the mill.

A preferred grinding aid composition according to the invention comprises from 6 to 36 wt% benzoic acid or a salt of benzoic acid; from 0.1 to 80 wt% of tripropylene glycol or polypropylene glycol; and from 10 to 80 wt% water. Preferably the grinding aid composition comprises from 6 to 30wt% of benzoic acid or salt of benzoic acid, more preferably from 6 to 20wt%. Preferably the grinding aid composition comprises from 5 to 75 wt% of tripropylene glycol or polypropylene glycol, more preferably from 10 to 60 wt%, based upon the weight of the grinding aid composition. Preferably the grinding aid composition comprises from 20 to 60 wt% water, more preferably from 30 to 50 wt%, based upon the weight of the grinding aid composition.

The grinding aid composition may further comprise an alkanolamine; more preferably triethanolamine and/or triisopropanolamine. The amount of triethanolamine and/or triisopropanolamine is suitably from 0.1 to 70 wt%, more preferably from 5 to 60 wt% and most preferably from 10 to 40 wt%, based upon the weight of the grinding aid composition. In one embodiment, the grinding aid composition does not comprise an alkanolamine.

The present invention further provides the use of benzoic acid or a salt of benzoic acid in a method of grinding an inorganic material in a mill, wherein at least 90 wt% of the inorganic material is limestone, lime and/or talc, for enhancing the efficiency of the grinding process. Preferably at least 90 wt% of the inorganic material is limestone and/or lime, more preferably at least 95 wt% and most preferably at least 99 wt%. Preferably the inorganic material comprises at least 90 wt% limestone, more preferably comprises at least 95 wt% limestone, yet more preferably comprises at least 99 wt% limestone and most preferably comprises 100 wt% limestone.

The ground material produced by the process of the invention is suitable for use in a variety of applications because the grinding aid can be food grade, VOC free and does not adversely affect the moisture retention in the ground product. For example, ground limestone produced by the process of the invention is suitably used in paints that have to meet VOC-free requirements; ground limestone or ground lime produced by the process of the invention is suitably used in food products and ground talc produced by the process of the invention is suitably used in personal care products.

The following non-limiting Examples are illustrative of the invention.

### Examples

### Preparation of Calcium Carbonate

Approximately 6kg of coarse calcium carbonate rocks up to 50mm diameter were first crushed using a jaw crusher (model 2x6, Sturtevant Inc., Hanover, MA) followed by a roll crusher (model 8x5, Sturtevant Inc., Hanover, MA) down to a maximum diameter of <2mm. The mineral was then sieved into size fractions as small as <45µm, which were all preheated for a minimum of an hour at 130°C to drive off excess moisture.

Maintaining the respective sieve proportions, the pre-heated calcium carbonate was recombined to make up 100g of starting material. This material was mixed using an overhead mixer (model RZR50, CAFRAMO, Warton, ONT Canada) at 300rpm for 2 minutes. The calcium carbonate was then dosed with a grinding aid formulation, using a micropipette under the same mixing conditions. The content was then mixed further for an additional 3 minutes following administration of the grinding aid.

### Milling of Calcium Carbonate

The calcium carbonate was milled using a planetary ball mill system (model: Pulverisette 5/4, Fritsch, Idar-Oberstein, Germany). 100g of calcium carbonate that has been pretreated with grinding aid was poured into a grinding bowl, preloaded with 20 stainless steel balls (1/2" diameter), which was then clamped into the system. Grinding took place for 30 minutes at 150rpm.

### Characterisation of Milled Calcium Carbonate

The contents of the grinding cup were sieved using a relatively large mesh (>lmm) to separate the grinding media from the finished product. The finished product was then mixed using an overhead mixer for 2 minutes, and evaluated based on surface area, size distribution and water absorption.

The surface area was evaluated using the ASTM C204-16 method in a Blaine air permeability apparatus.

The size distribution was evaluated as the percentage on residue retained on a 45µm sieve. This was carried out using an Alpine air jet sieve.

The water absorption was evaluated using a GINTRONIC GraviTest unit. This measured the difference in moisture absorbed at a relative humidity of 10% and a relative humidity of 85%.

### Grinding Aid Performance Assessment

Three different grinding aids, as described in Table 1, were tested and one test was carried out with no grinding aid:

**Table 1**

| | Grinding Aid | Dosage (ppm of dry grinding aid, based upon mass of calcium carbonate) |
|---|---|---|
| Example 1 | 20wt% Sodium Benzoate in water | 400 |
| Comparative Example 1 | 20wt% Triethanolamine in water | 400 |
| Comparative Example 2 | 60wt% Glycerol/ sodium acetate (3.4:1 ratio) in water | 780 |
| Comparative Example 3 | None | 0 |

Table 2 shows the results of the characterisation tests:

**Table 2**

| | Surface area (cm²/g) | Size distribution (% retained on 45µm sieve) | Water absorption (mg/g) |
|---|---|---|---|
| Example 1 | 382 | 9.1 | 1.1778 |
| Comparative Example 1 | 402 | 7.6 | 1.3333 |
| Comparative Example 2 | 373 | 8.0 | 1.8889 |
| Comparative Example 3 | 319 | 21.8 | 1.3556 |

Example 1 demonstrates that sodium benzoate functions as a grinding aid, providing ground material having considerably higher surface area and smaller particles than ground material produced using no grinding aid, as in Comparative Example 3. The sodium benzoate provides lower water absorption compared to the triethanolamine (Comparative Example 1) and the glycerol/sodium acetate grinding aid (Comparative Example 2).

### Further Grinding Aid Performance Assessment

The calcium carbonate was prepared as described above and was then pre-ground in the ball mill system for 30 minutes. Then the grinding aid composition was added and further milling in a planetary ball mill took place for 10 minutes. Characterisation was carried out as before.

Nine different grinding aids, as described in Table 3, were tested and one test was carried out with no grinding aid:

**Table 3**

| | Grinding Aid | Dosage (ppm of dry grinding aid, based upon mass of calcium carbonate) |
|---|---|---|
| Example 2 | 80wt% TPG/Sodium Benzoate/TIPA (5.6:1:1) in water | 1500ppm |
| Example 3 | 68wt% TPG/sodium benzoate (2.7:1) in water | 1500ppm |
| Example 4 | 80wt% PPG/Sodium Benzoate/TIPA (5.6:1:1) in water | 1500ppm |
| Example 5 | 68wt% PPG/sodium benzoate (2.7:1) in water | 1500ppm |
| Example 6 | 32wt% sodium benzoate in water | 1500ppm |
| Comparative Example 4 | 60wt% TPG in water | 1500ppm |
| Comparative Example 5 | 60wt%PPG in water | 1500ppm |
| Comparative Example 6 | 60wt% Glycerol/ sodium acetate (3.4:1 ratio) in water | 1500ppm |
| Comparative Example 7 | 60wt% Glycerol/ TIPA (51:9) in water | 1500ppm |
| Comparative Example 8 | None | 0 |

TPG is tripropylene glycol, PPG is polypropylene glycol, and TIPA is triisopropanolamine.

Table 4 shows the results of the characterisation tests:

**Table 4**

| | Surface area (cm²/g) | Size distribution (% retained on 45µm sieve) | Water absorption (mg/g) |
|---|---|---|---|
| Example 2 | 595 | 3.4 | 1.42 |
| Example 3 | 603 | 3.1 | 1.24 |
| Example 4 | 582 | 3.1 | 1.02 |
| Example 5 | 593 | 3.3 | 0.98 |
| Example 6 | 594 | 4.4 | 0.71 |
| Comparative Example 4 | 590 | 6.9 | 1.69 |
| Comparative Example 5 | 580 | 8.3 | 1.13 |
| Comparative Example 6 | 542.5 | 9 | 2.98 |
| Comparative Example 7 | 567 | 8.2 | 2.53 |
| Comparative Example 8 | 522 | 15.8 | 1.09 |

Examples 2-6 demonstrate that sodium benzoate, by itself or blended with TPG or PPG, and optionally TIPA, functions as an effective grinding aid, with an additive dosage of 1500 ppm, providing ground material having considerably higher surface area and smaller particles than ground material produced using no grinding aid, as in Comparative Example 8, and providing ground material having smaller particles than ground material produced with a TPG or PPG grinding aid, as in Comparative Examples 4 and 5.

Examples 2, 3, 4 and 5 demonstrate that blends of TPG or PPG with sodium benzoate, and optionally with TIPA at 1500ppm promote significantly less water absorption (mg/g) than the target 1.6 mg/g. Sodium benzoate alone at 1500 ppm (Example 6) has the lowest water absorption (0.71 mg/g).

Blends of (PPG or TPG)/sodium benzoate/TIPA and (PPG or TPG)/sodium benzoate (Examples 2-5) at 1500ppm are better grinding aids than PPG or TPG alone, as in Comparative Examples 4 and 5, giving a significantly smaller amount of material retained on a 45µm sieve than comparative examples 4 and 5.

Sodium benzoate based grinding aids, (Examples 2-6) are better grinding aids than blends containing glycerol and sodium acetate or triisopropanolamine, used in Comparative Examples 6 and 7, with a smaller amount of material retained on the 45µm sieve for Examples 2-6, as compared to Comparative Examples 6 and 7. Water absorption with blends of (PPG or TPG)/sodium benzoate/TIPA and (PPG or TPG)/sodium benzoate (Examples 2-5), or sodium benzoate alone (Example 6) are significantly lower than water absorption with blends containing glycerol and sodium acetate or triisopropanolamine (Comparative Examples 6 and 7). Water absorption in Comparative Examples 6 and 7 significantly exceeds the target water absorption of 1.6 mg/g.

## Claims

1. A method of grinding an inorganic material in a mill comprising steps of:
adding a grinding aid composition to the inorganic material; and
grinding the inorganic material in the mill;
wherein the grinding aid composition comprises at least 6 wt% of benzoic acid or a salt of benzoic acid; and
wherein at least 90 wt% of the inorganic material is limestone, lime and/or talc.

2. A method of grinding according to claim 1, wherein the inorganic material comprises at least 90 wt% limestone, based upon the weight of the inorganic material.

3. A method of grinding according to claim 1 or claim 2, wherein the mill is one or more ball mills, one or more roller mills or a combination of at least one ball mill and at least one roller mill.

4. A method of grinding according to any preceding claim, wherein the amount of water in the mill is less than 10 wt%, based upon the weight of the inorganic material in the mill.

5. A method of grinding according to any preceding claim, wherein the mill is operated in a continuous process and the grinding aid composition is added periodically or continually such that the grinding aid composition is present throughout the operation of the continuous process.

6. A method of grinding according to any preceding claim, wherein the grinding aid composition comprises from 10 to 80 wt% water.

7. A method of grinding according to any preceding claim, wherein the grinding aid composition comprises at least 6 wt% of a salt of benzoic acid and wherein the salt of benzoic acid is an alkali metal salt or an alkaline earth metal salt.

8. A method of grinding according to claim 7, wherein the grinding aid composition comprises at least 6 wt% of sodium benzoate.

9. A method of grinding according to any preceding claim, wherein the grinding aid composition comprises from 6 to 36wt% of benzoic acid or a salt of benzoic acid

10. A method of grinding according to any preceding claim, wherein the grinding aid composition comprises tripropylene glycol or polypropylene glycol.

11. A method of grinding according to any preceding claim, wherein the grinding aid composition comprises triethanolamine and/or triisopropanolamine.

12. A method of grinding according to any preceding claim, wherein the grinding aid composition comprises potassium sorbate.

13. A method of grinding according to any preceding claim, wherein the grinding aid composition does not contain any organic compounds having a boiling point that is less than or equal to 250°C at standard atmospheric pressure.

14. A method of grinding according to any preceding claim, wherein the ground inorganic material that results is such that less than 5 wt% of the ground material is retained on a 45 µm sieve.

15. A method of grinding according to any preceding claim, wherein the ground inorganic material that results has a Blaine fineness of greater than 3000 cm²/g.

16. A grinding aid composition comprising:
from 6 to 36 wt% benzoic acid or a salt of benzoic acid;
from 0.1 to 80 wt% of tripropylene glycol or polypropylene glycol; and
from 10 to 80 wt% water.

17. A grinding aid composition according to claim 16, comprising from 6 to 30 wt% of the benzoic acid or salt thereof.

18. A grinding aid composition according to claim 16 or claim 16, comprising from 5 to 75 wt% of tripropylene glycol or polypropylene glycol.

19. A grinding aid composition according to any one of claims 16 to 18, comprising from 20 to 70 wt% water.

20. A grinding aid composition according to any one of claims 16 to 19, comprising from 0.1 to 70wt% of triethanolamine and/or triisopropanolamine.

21. A grinding aid composition according to any one of claims 16 to 20, comprising from 10 to 60wt% potassium sorbate .

22. Use of benzoic acid or a salt of benzoic acid in a method of grinding an inorganic material in a mill, wherein at least 90 wt% of the inorganic material is limestone, lime and/or talc, for enhancing the efficiency of the grinding process.
